# EUROPÄISCHE PATENTANMELDUNG

(11) **EP 3 613 785 A1**
(43) Veröffentlichungstag der Anmeldung: **26.02.2020**
(21) Anmeldenummer: 18189953.5
(22) Anmeldetag: 21.08.2018
(51) Int. Cl.: C08G 18/48, C08G 18/75, C08G 18/76, C08G 18/10, C08G 18/24, C08G 18/28, C09D 175/08, C09J 175/08

(54) **TROCKNUNGSMITTEL FÜR FEUCHTIGKEITSHÄRTENDE ZUSAMMENSETZUNGEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft eine Polymer-Zusammensetzung herstellbar durch (a) Umsetzung eines NCO-reaktiven Polymers, welches mindestens zwei NCO-reaktive Gruppen aufweist, mit einem Polyisocyanat, wobei das molare Verhältnis von Polyisocyanat-Molekülen zu NCO-reaktiven Gruppen des NCO-reaktiven Polymers mindestens 1,25 : 1 beträgt; und (b) Umsetzung des Reaktionsproduktes aus Schritt (a) mit einem NCO-reaktiven Silan. Die Erfindung betrifft außerdem eine feuchtigkeitsreaktive Zusammensetzung enthaltend die Polymer-Zusammensetzung und Verfahren zur Herstellung der Polymer-Zusammensetzung und der feuchtigkeitsreaktiven Zusammensetzung. Die Erfindung betrifft schließlich die Verwendung der Polymer-Zusammensetzung als Trocknungsmittel für feuchtigkeitshärtende Klebstoffe, Dichtstoffe und Beschichtungsstoffe.

## Beschreibung

Die Erfindung betrifft Polymerzusammensetzungen enthaltend silanfunktionelle Polymere, ein Verfahren zu deren Herstellung und deren Verwendung als Trocknungsmittel für feuchtigkeitshärtende Zusammensetzungen, insbesondere Dicht-, Kleb- und Beschichtungsstoffe. Die Erfindung betrifft außerdem feuchtigkeitshärtende Zusammensetzungen umfassend diese Polymerzusammensetzungen sowie Verfahren zu deren Herstellung.

Als silanfunktionelle Polymere werden Polymere bezeichnet, die mit mindestens einer Silangruppe, bevorzugt aber zwei oder mehreren Silangruppen modifiziert sind. Als Silangruppe wird dabei eine siliziumorganische Gruppe bezeichnet, die mindestens einen über eine Si-O-Bindung gebundenen organischen Rest aufweist, beispielsweise eine Alkoxy- oder Acyloxygruppe. Derartige Silangruppen sind dem Fachmann auch als Organoalkoxysilan bzw. Organoacyloxysilan bekannt. Silane haben die Eigenschaft, bei Kontakt mit Feuchtigkeit zu Organsilanolen zu hydrolysieren, also Gruppen mit mindestens einer Silanolgruppe (Si-OH Gruppe) zu bilden, und durch nachfolgende Kondensation zu Organosiloxanen zu polymerisieren. Diese Polymerisation führt im Fall silanfunktioneller Polymere zur Vernetzung der Polymere zu einem weitmaschigen Netzwerk. Dieser Vorgang wird auch als Aushärtung bezeichnet. Wegen dieser Fähigkeit zur weiteren Vernetzung werden silanfunktionelle Polymere auch als Präpolymere bezeichnet.

Silanfunktionelle Polymere können beispielsweise durch Umsetzung von Isocyanatgruppen-haltigen (NCO-haltige) Polymeren mit sekundären Aminosilanen erhalten werden. Solche Produkte werden beispielsweise in der EP 2 952 533 A1 erwähnt. Dabei werden die Isocyanatgruppen vollständig mit den Aminogruppen der Aminosilane zu Harnstoffgruppen umgesetzt, so dass keine freien Isocyanatgruppen verbleiben. Die Isocyanatgruppen-haltigen Polymere werden üblicherweise durch Umsetzung von Polyisocyanaten mit hochmolekularen Polyolen erhalten. Vorzugsweise werden dabei Diisocyanate mit Diolen umgesetzt.

Das molare Verhältnis von NCO-Gruppen aus den Diisocyanaten zu den Hydroxylgruppen (OH-Gruppen) des hochmolekularen Polyols (NCO : OH Verhältnis) bestimmt dabei über die Zusammensetzung der NCO- haltigen Polymere. Bei der Umsetzung von Diisocyanaten mit Diolen wird idealerweise ein NCO : OH Verhältnis von 2 : 1 gewählt, so dass im statistischen Mittel immer zwei Diisocyanate mit einem Diol reagieren und ein Produkt mit genau zwei freien Isocyanatgruppen entsteht. Als Nebenprodukte fallen dabei höhermolekulare Polymere an, die durch Reaktion von zwei oder mehr Diolen mit mehr als zwei Diisocyanaten entstehen. Ein gegenüber dem Idealwert von 2 : 1 geringeres NCO : OH Verhältnis begünstigt die Bildung von höhermolekularen Polymeren, während ein größeres NCO : OH Verhältnis einen größeren Anteil von freien Diisocyanaten im Produktgemisch zu Folge hat. Ersteres hat den Nachteil, dass die Viskosität des unvernetzten NCO-haltigen Polymers und in der Folge die des aus diesem hergestellten silanfunktionellen Polymers steigt, so dass letzteres schlechter in eine Dicht- oder Klebstoffzusammensetzung weiterverarbeitet werden kann. Zudem weisen derartige Produkte den Nachteil auf, dass überschüssiges Diisocyanat aufwändig entfernt werden muss (beispielsweise destillativ). Aus diesem Grund werden NCO-haltige Polymere zur Herstellung silanterminierter Polymere üblicherweise mit einem NCO : OH Verhältnis im Bereich von 1,5 : 1 bis 2,2 : 1 hergestellt.

Die EP 2 952 533 A1 offenbart beispielsweise die Herstellung von silanfunktionellen Polymeren durch Umsetzung von Polyoxypropylendiol mit Isophorondiisocyanat (IPDI) bei einem NCO : OH-Verhältnis von 2,1 : 1 und anschließende Umsetzung des Reaktionsproduktes mit (N-(3-Triethoxy-silyl-propyl)-amino-bernsteinsäurediethylester bzw. (N-(3-Trimethoxysilyl-propyl)-amino-bern-steinsäurediethylester. Gemäß der allgemeinen Lehre der EP 2 952 533 A1 wird das NCO : OH Verhältnis vorzugsweise auf einen Wert von 1,5 : 1 bis 2,2 : 1 eingestellt.

Aufgrund ihrer Fähigkeit zur feuchtigkeitsabhängigen Vernetzung werden silanfunktionelle Polymere beispielsweise als Bindemittel für feuchtigkeitshärtende Dicht-, Kleb- und Beschichtungsstoffe eingesetzt. Da sie frei von Isocyanatgruppen sind, können sie anders als beispielsweise Isocyanatpräpolymere zur Herstellung von feuchtigkeitshärtenden Dicht- und Klebstoffzusammensetzungen mit Formulierungsbestandteilen kombiniert werden, die isocyanatreaktive Gruppen tragen. Beispiele hierfür sind Polyole als Weichmacherkomponente und Aminosilane als Haftvermittler.

Bei der Herstellung von feuchtigkeitshärtenden Dicht-, Kleb- und Beschichtungsstoffen auf Basis silanfunktioneller Polymere ist allerdings darauf zu achten, dass die Zusammensetzung weitgehend frei von Feuchtigkeit sein muss, da es ansonsten bereits bei der Lagerung der feuchtigkeitshärtenden Zusammensetzungen zu einer vorzeitigen Vernetzung des Bindemittels kommt, wodurch die feuchtigkeitshärtende Zusammensetzung unbrauchbar wird. Um eine solche unerwünschte, spontane Vernetzung zu verhindern, werden der feuchtigkeitshärtenden Zusammensetzung üblicherweise Trocknungsmittel zugesetzt. Dies ist insbesondere deshalb erforderlich, weil einerseits viele der üblicherweise verwendeten Bestandteile von feuchtigkeitshärtenden Dicht- und Klebstoffzusammensetzungen, wie z.B. Füllstoffe, selbst Wasser enthalten und somit unweigerlich Feuchtigkeit in die feuchtigkeitshärtende Zusammensetzung eingetragen wird. Andererseits muss die feuchtigkeitshärtende Zusammensetzung gegen von außen eindringende Feuchtigkeit durch undichte Verpackung oder Diffusion geschützt werden.

Als Trocknungsmittel werden beispielsweise monomere Vinylsilane, wie Vinyltrimethoxysilan oder Vinyltriethoxysilan, eingesetzt. Diese monomeren Silane reagieren bevorzugt mit dem in der Zusammensetzung enthaltenen Wasser und verhindern somit die unerwünschte vorzeitige Reaktion dieses Wassers mit den Silangruppen des Bindemittels. Allerdings unterliegen Vinylsilane zunehmend schärferen Kennzeichnungspflichten, weswegen ein Interesse daran besteht, diese Vinylsilane durch andere, nicht kennzeichnungspflichtige und arbeitshygienisch weniger bedenkliche, Trocknungsmittel zu ersetzen.

Die Verwendung von silanfunktionellen Polymeren als Bindemittel in Kombination mit Trocknungsmitteln wird beispielsweise auch in DE 10 2005 026 085 A1 offenbart. Diese Publikation beschreibt silanmodifizierte Harnstoffderivate und deren Verwendung als Rheologiehilfsmittel für Dicht- und Klebstoffe. In einer bevorzugten Ausführungsform werden die Harnstoffderivate durch Reaktion eines Diisocyanats und eines Aminosilans in Gegenwart eines silanfunktionellen Polymers hergestellt. Dabei ist nachteilig, dass die erhaltenen Mischungen aus Bindemittel und Harnstoffderivat hochviskos sind und meist nicht ohne weitere Zugabe von Weichmachern verarbeitet werden können. Zudem wird beschrieben, dass die Zugabe von Wasserfängern zur Erhöhung der Lagerstabilität der Harnstoffderivate im Bindemittel notwendig ist. Als beispielhafte Wasserfänger werden Vinylsilane genannt, insbesondere Vinyltrimethoxysilan (VTMO). Oben genanntes gilt für eine ebenfalls beschriebene Mischungen von extern hergestellten Harnstoffderivaten mit silanfunktionellen Bindemitteln.

Vor diesem Hintergrund liegt der vorliegenden Erfindung die Aufgabe zugrunde, neue, arbeitshygienisch weniger bedenkliche und einfach herzustellende Trocknungsmittel für feuchtigkeitshärtende Zusammensetzungen, insbesondere Dicht-, Kleb- und Beschichtungsstoffe, bereit zu stellen, die geeignet sind, monomere Vinylsilane wie beispielsweise Vinyltrimethoxysilan (VTMO) zu ersetzen.

Diese Aufgabe wird durch den Einsatz von Polymerzusammensetzungen gelöst, die silanfunktionelle Polymere enthalten, welche durch Umsetzung eines isocyanatreaktiven (NCO-reaktiven) Polymers mit einem Polyisocyanat und nachfolgende Reaktion der verbliebenen Isocyanatgruppen mit einen NCO-reaktiven Silan hergestellt werden können, wobei das Verhältnis der Stoffmenge des Polyisocyanates zu der Stoffmenge der NCO-reaktiven Gruppen des Polymers mindestens 1,25 beträgt. Obwohl ein so deutlicher Überschuss an Polyisocyanaten zu NCO-reaktiven Gruppen üblicherweise aus den oben genannten Gründen als unvorteilhaft betrachtet wird, hat sich überraschenderweise gezeigt, dass die auf diese Weise hergestellten Polymerzusammensetzungen neben ihrer Funktion als Bindemittel auch die Aufgabe eines Trocknungsmittels übernehmen können und somit die Verwendung herkömmlicher zusätzlicher Trocknungsmittel, wie z.B. Vinyltriethoxysilan oder Vinyltrimethoxysilan, überflüssig machen. Gleichzeitig weisen die auf diese Weise hergestellten Polymerzusammensetzungen eine geringere Viskosität auf als vergleichbare Polymere, die aus den gleichen Komponenten, aber mit geringerem Verhältnis von Polyisocyanaten zu OH-Gruppen hergestellt werden. Sie weisen auch eine geringere Viskosität auf als die nach der Lehre der DE 10 2005 026 085 A1 erhaltenen Produkte, bei denen Polyisocyanate in Gegenwart silanfunktioneller Polymere in-situ mit isocyanatreaktiven Silanen umgesetzt werden. Zudem ergibt sich eine deutlich vereinfachte Herstellung gegenüber der Lehre der DE 10 2005 026 085 A1.

Die Erfindung betrifft somit eine Polymerzusammensetzung herstellbar durch:
a) Umsetzung eines NCO-reaktiven Polymers, welches mindestens zwei NCO-reaktive Gruppen pro Molekül aufweist, mit einem Polyisocyanat, wobei das molare Verhältnis der Polyisocyanat-Moleküle zu den NCO-reaktiven Gruppen des NCO-reaktiven Polymers mindestens 1,25 : 1 beträgt;
und nachfolgende
b) Umsetzung der verbliebenen NCO-Gruppen in dem Reaktionsprodukt aus Schritt a) mit einem NCO-reaktiven Silan.

Die erfindungsgemäße Polymerzusammensetzung umfasst silanfunktionelle Polymere, die aus der Reaktion von einem NCO-reaktiven Polymer, welches mindestens zwei NCO-reaktive Gruppen aufweist, mit mindestens zwei Polyisocyanaten und nachfolgender Reaktion mit mindestens zwei NCO-reaktiven Silanen hervorgegangen sind. Außerdem kann die Zusammensetzung höhermolekulare Polymere umfassen, die aus der Reaktion von mehr als einem NCO-reaktiven Polymer mit mehr als zwei Polyisocyanaten und nachfolgender Reaktion mit mindestens zwei NCO-reaktiven Silanen hervorgegangen sind. Allerdings ist der Anteil dieser höhermolekularen Polymere aufgrund des hohen eingesetzten Verhältnisses von Polyisocyanaten zu NCO-reaktiven Gruppen im Vergleich zu den nach dem Stand der Technik hergestellten silanfunktionellen Polymeren relativ gering, was zur Folge hat, dass die Zusammensetzung insgesamt eine relative geringe Viskosität aufweist.

Weiterhin enthält die Zusammensetzung sogenannte freie silanfunktionelle Umsetzungsprodukte, die aus der Reaktion eines Polyisocyanats (das nicht mit dem NCO-reaktiven Polymer reagiert hat) mit einer der Anzahl der NCO-Gruppen des Polyisocyanats entsprechenden Anzahl von NCO-reaktiven Silanen hervorgegangen sind. Die molaren Verhältnisse dieser Komponenten in der erfindungsgemäßen Zusammensetzung wird bei ansonsten gleichen Einsatzstoffen im Wesentlichen durch das molare Verhältnis der Polyisocyanat-Moleküle zu den NCO-reaktiven Gruppen des Polymers im Schritt a) bestimmt.

Es wird vermutet, dass in der erfindungsgemäßen Polymerzusammensetzung enthaltene freie silanfunktionelle Umsetzungsprodukte bevorzugt oder mindestens gleich schnell wie die endständigen Silangruppen der silanfunktionellen Polymere mit Wasser reagieren und so als Trocknungsmittel wirken. Dies führt dazu, dass die in der Polymerzusammensetzung enthaltenen silanfunktionellen Polymere in Gegenwart geringer Wassermengen nicht oder lediglich im untergeordneten Maß vernetzen und daher die Polymerzusammensetzung an sich sowie daraus herstellbare feuchtigkeitshärtende Zusammensetzungen äußerst lagerstabil sind. Die bekannte Hydrolyse/KondensationsReaktion der in der Polymerzusammensetzung enthaltenen silanfunktionellen Polymere mit Wasser, die bestimmungsgemäß erst nach der Applikation der Polymerzusammensetzung bzw. einer diese enthaltenden Formulierung (z.B. Klebstoff, Dichtstoff) einsetzen soll, würde ansonsten vorzeitig und letztlich nicht bestimmungsgemäß zu einer Zunahme des Molekulargewichts und folglich zu einem Anstieg der Viskosität der Polymerzusammensetzung führen, was wiederum die Verarbeitung einer derartigen Formulierung erschwert oder gar verhindert.

Wird die Polymerzusammensetzung mit größeren Mengen Wasser und gegebenenfalls einem Vernetzungskatalysator in Kontakt gebracht, kommt es zur Vernetzung der silanfunktionellen Polymere und damit zur Aushärtung der Zusammensetzung, wie es beispielsweise bei der Anwendung als feuchtigkeitshärtender Dichtstoff gewünscht ist. Die erfindungsgemäße Polymerzusammensetzung kann somit als Kombination aus feuchtigkeitshärtendem Bindemittel und Trocknungsmittel für eine feuchtigkeitshärtende Zusammensetzung, insbesondere einen Dicht- oder Klebstoff oder ein Beschichtungsmittel eingesetzt werden.

Bei der Umsetzung des NCO-reaktiven Polymers mit dem Polyisocyanat werden vorzugsweise sämtliche NCO-reaktiven Gruppen des NCO-reaktiven Polymers umgesetzt. Ebenso werden bei der Umsetzung des Reaktionsproduktes aus Schritt a) mit dem NCO-reaktiven Silan vorzugsweise sämtliche freie NCO-Gruppen des Reaktionsproduktes aus Schritt a) umgesetzt. Der Fachmann kann dies durch die Bestimmung des Isocyanatgehalts, beispielsweise durch Titration gemäß DIN 11909 oder durch IR-Spektroskopie, feststellen.

Die erfindungsgemäße Polymerzusammensetzung weist vorzugsweise eine Viskosität von weniger als 150 Pa·s, bevorzugt 2 bis 70 Pa·s, besonders bevorzugt 5 bis 50 Pa·s, am meisten bevorzugt 15 bis 27 Pa·s auf, gemessen nach der Vorschrift der DIN EN ISO 3219/B3.

Das molare Verhältnis von Polyisocyanat zu NCO-reaktiven Gruppen des NCO-reaktiven Polymers bezeichnet hierbei das Verhältnis der Stoffmenge an Polyisocyanat in mol zu der Gesamtanzahl an NCO-reaktiven Gruppen des NCO-reaktiven Polymers in mol. Die Stoffmenge an Polyisocyanat ergibt sich dabei aus dem Molekulargewicht des Polyisocyanats und der Masse an eingesetztem Polyisocyanat. Die Gesamtzahl der NCO-reaktiven Gruppen des NCO-reaktiven Polymers in mol ergibt sich aus der Masse an NCO-reaktivem Polymer und der Anzahl NCO-reaktiver Gruppen bezogen auf die Masse des NCO-reaktiven Polymers.

Das molare Verhältnis von Polyisocyanat-Molekülen zu NCO-reaktiven Gruppen des NCO-reaktiven Polymers beträgt in Schritt a) vorzugsweise 1,25 : 1 bis 10 : 1. Besonders bevorzugt beträgt in Schritt (a) das molare Verhältnis von Polyisocyanat zu NCO-reaktiven Gruppen des NCO-reaktiven Polymers 1,5 : 1 bis 7 : 1, am meisten bevorzugt beträgt es 2 : 1 bis 5 : 1.

Dabei ist im Allgemeinen davon auszugehen, dass die NCO-reaktiven Gruppen jeweils zunächst nur mit einer NCO-Gruppe reagieren. Es ist allerdings möglich, dass die dabei gebildeten Reaktionsprodukte (z.B. Urethane) unter bestimmten Bedingungen mit einer weiteren NCO-Gruppe reagieren können. Sollte dies gewünscht sein oder beobachtet werden, kann der Fachmann das molare Verhältnis entsprechend anpassen.

Geeignete NCO-reaktive Polymere weisen mindestens zwei NCO-reaktive Gruppen auf. Unter einer NCO-reaktiven Gruppe versteht man eine funktionelle Gruppe, die mit einer Isocyanatgruppe eine Additionsreaktion eingeht. Geeignete NCO-reaktive Gruppen sind beispielsweise Hydroxyl-, Amino- und Mercaptogruppen. Es können auch Mischungen NCO-reaktiver Polymere mit jeweils unterschiedlichen NCO-reaktiven Gruppen eingesetzt werden. Es können auch NCO-reaktive Polymere mit unterschiedlichen NCO-reaktiven Gruppen eingesetzt werden.

Vorzugsweise handelt es sich bei den NCO-reaktiven Gruppen um Hydroxylgruppen (OH-Gruppen).

Zur Bestimmung der molaren Menge der NCO-reaktiven Gruppen kann auf verschiedene Methoden zurückgegriffen werden. So kann im Falle von NCO-reaktivem Polymer mit NCO-reaktiven Aminogruppen die Aminzahl (gemessen nach der Vorschrift DIN 53176:2002-11) und die Masse des jeweiligen NCO-reaktiven Polymers herangezogen werden. So kann im Falle von Polyolen als NCO-reaktivem Polymer die molare Menge an OH-Gruppen aus der Masse des NCO-reaktiven Polymers und der Hydroxylzahl nach bekannten Berechnungsmethoden berechnet werden. Die Hydroxylzahl wird, wenn nicht anders angegeben, nach der Vorschrift der DIN 53240-1 (2012) bestimmt.

Sollten andere Methoden nicht anwendbar sein, kann das NCO-reaktive Polymer auch mit einem Polyisocyanat mit bekanntem NCO-Gehalt bis zu einem konstanten NCO-Gehalt im deutlichen Überschuss umgesetzt werden und die Menge an nicht reagierten NCO-Gruppen wie oben beschrieben ermittelt werden. Aus der Differenz der molaren Menge der eingesetzten NCO-Gruppen zu den nicht reagierten NCO-Gruppen kann dann die molare Menge der übrig gebliebenen NCO-reaktiven Gruppen im Reaktionsprodukt von Schritt (a) bestimmt werden.

Bei dem NCO-reaktiven Polymer kann es sich beispielsweise um ein Polyacrylat, ein Polycarbonat, einen Polyester, Polyurethan oder einen Polyether handeln, welches mit mindestens zwei NCO-reaktiven Gruppen funktionalisiert ist.

Polyether sind als NCO-reaktive Polymere besonders bevorzugt, da sie eine flexible und elastische Struktur aufweisen, mit der man Zusammensetzungen herstellen kann, die hervorragende elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

Die erfindungsgemäß einzusetzenden NCO-reaktiven Polymere weisen vorzugsweise ein zahlenmittleres Molekulargewicht von 2.000 bis 100.000 g/mol auf. Insbesondere weisen die erfindungsgemäß einzusetzenden NCO-reaktiven Polymere ein zahlenmittleres Molekulargewicht von 4.000 bis 100.000 g/mol, bevorzugt 4.000 bis 50.000 g/mol, besonders bevorzugt 8.000 bis 22.000 g/mol auf. Diese Molekulargewichte sind besonders vorteilhaft, da die entsprechenden Zusammensetzungen gute filmbildende Eigenschaften und ein ausgewogenes Verhältnis von Viskosität (leichte Verarbeitbarkeit), Festigkeit und Elastizität aufweisen.

Besonders vorteilhafte viskoelastische Eigenschaften lassen sich erreichen, wenn man NCO-reaktive Polymere mit einer engen Molmassenverteilung und damit einer niedrigen Polydispersität einsetzt. Die Polydispersität gibt das Verhältnis von gewichtsgemitteltem zu zahlengemitteltem Molekulargewicht Mw/Mn wieder. Vorzugsweise weist das NCO-reaktive Polymer eine Polydispersität von höchstens 3, bevorzugt höchstens 1,7, besonders bevorzugt höchstens 1,5 auf.

Soweit nicht anders angegeben wird das zahlen- und/oder gewichtsmittlere Molekulargewicht durch Gelpermeationschromatographie (GPC) nach der Vorschrift der DIN 55672-1:2016-03 mit THF als Eluent gegen einen Polystyrolstandard ermittelt.

Vorzugsweise handelt es sich bei dem NCO-reaktiven Polymer um ein Polyol. Geeignete Polyole für die Herstellung der Zusammensetzung sind insbesondere Polyetherpolyole, Polyesterpolyole und Polycarbonatpolyole sowie Mischungen dieser Polyole, wobei Polyetherpolyole besonders bevorzugt sind. Besonders geeignet sind Polytetramethylenpolyole, Polyoxyethylenpolyole und Polyoxypropylenpolyole, insbesondere Polyoxyethylendiole, Polyoxypropylendiole, Polyoxyethylentriole und Polyoxypropylentriole. Es können auch Mischungen unterschiedlicher Polyole eingesetzt werden.

Die erfindungsgemäß einzusetzenden Polyole weisen vorzugsweise ein zahlenmittleres Molekulargewicht von 2.000 bis 100.000 g/mol, insbesondere von 4.000 bis 50.000 g/mol, bevorzugt 6.000 bis 30.000 g/mol, besonders bevorzugt 8.000 bis 22.000 g/mol auf.

Besonders bevorzugt sind Polyetherpolyole, die durch die so genannte Doppel-Metall-Cyanid-Katalyse (DMC-Katalyse) herstellbar sind. Dies ist z.B. in der US-A 5 158 922 (z.B. Beispiel 30) und EP A 0 654 302 (S. 5, Z. 26 bis S. 6, Z. 32) beschrieben. Auf diese Art hergestellte Polyetherpolyole zeichnen sich durch eine besonders niedrige Polydispersität, durch ein hohes mittleres Molekulargewicht und durch einen sehr niedrigen Ungesättigtheitsgrad aus. Entsprechende Produkte sind beispielsweise bei Covestro Deutschland AG unter der Bezeichnung, Acclaim® Polyol 4200 N, Acclaim® Polyol 8200 N und Acclaim® Polyol 12200 N erhältlich.

Die erfindungsgemäß einzusetzenden Polyole weisen vorzugsweise eine mittlere OH-Funktionalität von 1,6 bis 3, besonders bevorzugt von 1,9 bis 2,1, auf. Unter der OH-Funktionalität einer Verbindung ist die mittlere OH-Funktionalität zu verstehen. Sie gibt die mittlere Anzahl an Hydroxylgruppen pro Molekül an. Die mittlere OH-Funktionalität einer Verbindung kann auf Basis des zahlenmittleren Molekulargewichts und der Hydroxylzahl berechnet werden. Die Hydroxylzahl einer Verbindung wird, wenn nicht anders angegeben, nach der Norm DIN 53240-1 (2012) bestimmt.

Insbesondere geeignet sind Polyoxyalkylendiole oder Polyoxyalkylentriole mit einem Ungesättigtheitsgrad kleiner als 0,02 mEq/g (bestimmt nach der Vorschrift in ASTM D4671-16) und mit einem zahlenmittleren Molekulargewicht (bestimmt durch GPC) im Bereich von 2000 bis 30000 g/mol, sowie Polyoxyethylendiole, Polyoxyethylentriole, Polyoxypropylendiole und Polyoxypropylentriole mit einem mittleren Molekulargewicht von 2000 bis 30000 g/mol. Ebenfalls besonders geeignet sind so genannte Ethylenoxid-terminierte ("EOendcapped", ethylene oxide-endcapped) Polyoxypropylenpolyole. Letztere werden erhalten, wenn bei der Herstellung zur Polymerisation zunächst Propylenoxid als Monomer eingesetzt wird und dann vor Abbruch der Polymerisation anstelle von Propylenoxid Ethylenoxid als Monomer verwendet wird.

Weiterhin geeignet sind Hydroxylgruppen-terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol® von der Firma Elastogran GmbH, Deutschland kommerziell erhältlich sind.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole.

Weiterhin geeignet sind Polyole, welche aus natürlichen Fetten und Ölen durch Abbauprozesse wie Alkoholyse oder Ozonolyse und anschließender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® CTBN von der Firma Emerald Performance Materials, LLC, USA, hergestellt werden können.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol. Ganz besonders geeignet ist Polyoxypropylendiol.

Als Polyisocyanate für die Herstellung der Polymerzusammensetzung können handelsübliche Polyisocyanate, insbesondere Diisocyanate, verwendet werden.

Der Begriff "Polyisocyanat", wie er hier verwendet wird, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die monomeren Diisocyanate. Diese haben die allgemeinen Struktur O=C=N-R-N=C=O, wobei R üblicherweise für aliphatische, alicyclische und/oder aromatische Reste steht.

Aus Polyisocyanaten lassen sich wegen der Mehrfachfunktionalität (≥ 2 Isocyanat-Gruppen) eine Vielzahl von Polymeren (z.B. Polyurethane, Polyharnstoffe und Polyisocyanurate) und niedermolekularen Verbindungen (z.B. solche mit Uretdion-, Isocyanurat-, Allophanat-, Biuret-, Iminooxadiazindion- und/oder Oxadiazintrionstruktur) herstellen.

Wenn hier allgemein von "Polyisocyanaten" die Rede ist, so sind damit monomere und/oder oligomere Polyisocyanate gleichermaßen gemeint. Wenn hier von "oligomeren Polyisocyanaten" die Rede ist, dann sind damit Polyisocyanate gemeint, die aus mindestens zwei Polyisocyanatmolekülen aufgebaut sind, d.h. es sind Verbindungen, die ein Reaktionsprodukt enthaltend mindestens zwei monomere Polyisocyanatmoleküle darstellen oder enthalten.

Es können auch Mischungen von Polyisocyanaten bzw. Diisocyanaten eingesetzt werden.

Vorzugsweise werden Diisocyanate eingesetzt, besonders bevorzugt monomere Diisocyanate mit einem Molekulargewicht im Bereich von 140 bis 400 g/mol mit aliphatisch, cycloaliphatisch, araliphatisch und/oder aromatisch gebundenen Isocyanatgruppen.

In einer bevorzugten Ausführungsform ist das Polyisocyanat ausgewählt aus monomeren Diisocyanaten. Geeignete monomere Diisocyanate sind insbesondere solche einer Gruppe von Polyisocyanaten umfassend 1,4-Diisocyanatobutan (BDI), 1,5-Diisocyanatopentan (PDI), 1,6-Hexamethylendiisocyanat (HDI), 2-Methyl-1,5-diisocyanatopentan, 1,5-Diisocyanato-2,2-dimethylpentan, 2,2,4-bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexyl-methan, 4,4'-Diisocyanato-3,3',5,5'-tetramethyldicyclohexylmethan, 4,4'-Diisocyanato-1,1'-bis-(cyclohexyl), 4,4'-Diisocyanato-3,3'-dimethyl-1,1'-bi(cyclohexyl), 4,4'-Diisocyanato-2,2',5,5'-tetramethyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xylylendiisocyanat; XDI), 1,3- und 1,4-Bis(1-isocyanato-1-methylethyl)-benzol (TMXDI), Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin und Mischungen davon.

Weitere ebenfalls geeignete Diisocyanate finden sich darüber hinaus beispielsweise in Justus Liebigs Annalen der Chemie Band 562 (1949) S. 75 - 136*.*

In einer bevorzugten Ausführungsform ist das Polyisocyanat aus 1-Isocyanato-3,3,5-trimethyl-5-isocyanatomethyl-cyclohexan (IPDI), 1,6-Hexamethylendiisocyanat (HDI), 2,4- und/oder 2,6-Toluylendiisocyanat (TDI), oder Mischungen davon ausgewählt.

In einer besonders bevorzugten Ausführungsform wird 1-Isocyanato-3,3,5-trimethyl-5-isocyanatomethyl-cyclohexan (IPDI) eingesetzt.

Wird eine besonders niedrige Viskosität der Zusammensetzung gewünscht, so wird bevorzugt HDI oder eine Mischung von HDI mit anderen Diisocyanaten eingesetzt. Besonders bevorzugt beträgt das Verhältnis von Polyisocyanaten zu NCO-reaktiven Gruppen hierbei mindestens 2,5:1.

Bei kleineren Verhältnissen von Polyisocyanaten zu NCO-reaktiven Gruppen wird bevorzugt ein Polyisocyanat mit unterschiedlich reaktiven Isocyanatgruppen wie 1-Isocyanato-3,3,5-trimethyl-5-isocyanatomethyl-cyclohexan (IPDI), 2,4- und/oder 2,6-Toluylendiisocyanat (TDI) zur Erreichung einer niedrigen Viskosität eingesetzt.

Geeignete NCO-reaktive Silane weisen mindestens eine NCO-reaktive Gruppe, wie beispielsweise eine Hydroxy-, Amino- und Mercaptogruppe auf. Es können auch Mischungen unterschiedlicher NCO-reaktiver Silane eingesetzt werden. Als NCO-reaktives Silan wird eine Verbindung eingesetzt, die mindestens ein Siliziumatom, mindestens einen über eine Si-O-Bindung an das Siliziumatom gebundenen organischen Rest und mindestens einen über eine Si-C-Bindung an das Siliziumatom gebundenen organischen Rest, welcher mindestens eine NCO-reaktive Gruppe aufweist, bezeichnet. Beispielsweise handelt es sich bei dem NCO-reaktiven Silan um ein Aminosilan, Mercaptosilan oder Hydroxysilan.

Vorzugsweise handelt es sich bei dem NCO-reaktiven Silan um ein Aminosilan. Als Aminosilan für die Herstellung der Zusammensetzung wird eine Verbindung eingesetzt, die mindestens ein Siliziumatom, mindestens einen über eine Si-O-Bindung an das Siliziumatom gebundenen organischen Rest und mindestens einen über eine Si-C-Bindung an das Siliziumatom gebundenen organischen Rest, welcher mindestens eine primäre oder sekundäre Aminogruppe aufweist, bezeichnet. Vorzugsweise handelt es sich bei dem über eine Si-O-Bindung an das Siliziumatom gebundenen organischen Rest um eine Alkoxy- oder Acyloxygruppe. Bei der Aminogruppe handelt es sich vorzugsweise um eine sekundäre Aminogruppe. Solche Aminosilane, die eine sekundäre Aminogruppe aufweisen, werden auch als sekundäre Aminosilane bezeichnet.

Es können auch Mischungen aus primären und sekundären Aminosilanen eingesetzt werden.

Beispiele für geeignete Aminosilane sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, z.B. N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium, bevorzugt mit Ethoxygruppen.

Bei Einsatz von Produkten aus der Addition von primären Aminosilanen wie 3-Aminopropyltrimethoxysilan oder 3-Aminopropyldimethoxymethylsilan an Maleinsäurediestern, kann es nach der Lehre der EP-A 0 807 649 zu einer Cyclokondensation kommen, die die Viskosität der erfindungsgemäßen alkoxysilangruppenaufweisenden Prepolymere noch weiter absenken kann. Dementsprechend kann diese Hydantoinbildung in einer bevorzugten Ausführungsform der vorliegenden Erfindung auch absichtlich herbeigeführt werden.

Diese Cyclokondensation kann durch einfaches Rühren des mit einem isocyanatreaktiven Alkoxysilan der Formel (III) verkappten Polyether-basierenden Polyurethan Prepolymeren bei Temperaturen von 70 °C bis 180 °C, vorzugsweise von 80 °C bis 150 °C herbeigeführt werden. Die Reaktion kann ohne weitere Katalyse, oder, bevorzugt, durch Katalyse beschleunigt durchgeführt werden. Als Katalysatoren kommen sowohl basische, wie auch saure organische Verbindungen in Betracht, beispielsweise N,N,N,N-Benzyltrimethylammoniumhydroxid, andere in organischen Medien lösliche Hydroxide, DBN, DBU, andere Amidine, Zinnoctoat, Dibutylzinndilaurat, andere organische Zinnverbindungen, Zinkoctoat, Essigsäure, andere Alkansäuren, Benzoesäure, Benzoylchlorid, andere Säurechloride oder Dibutylphosphat, bzw. andere Derivate der Phosphorsäure. Der Katalysator wird in Mengen von 0,005 Gew.-% bis 5 Gew.-%, bevorzugt 0,05 Gew.-% bis 1 Gew.-% zugegeben.

Besonders wirksame Trockungsmittel erhält man, wenn als Aminosilane solche Verbindungen eingesetzt werden, bei denen die Aminogruppe durch eine Methylengruppe mit einem Siliciumatom verbunden ist. Beispielsweise genannt sei N-Cyclohexylaminomethyltriethoxysilan, welches als GENIOSIL® XL 926 (Wacker) erhältlich ist.

In einer Ausführungsform handelt es sich bei dem NCO-reaktiven Silan um eine Verbindung der Formel (I):

R¹₃Si(CH₂)ₙX (I),

wobei
- R¹: jeder Rest jeweils unabhängig voneinander ausgewählt ist aus C₁-C₈-Alkyl, C₆-C₂₀-Aryl, C₁-C₈-Alkoxy oder C₁-C₈-Acyloxy und mindestens einer der Reste R¹ ein C₁-C₈-Alkoxy oder C₁-C₈-Acyloxyrest ist,
- n: eine ganze Zahl zwischen 1 und 4 ist,
- X: ausgewählt ist aus -OH, -SH oder -NHR²;
- R²: ausgewählt ist aus H, C₁-C₂₀-Alkyl, -CH₂CH₂CN oder -CHR³CH₂COOR⁴,
- R³: ausgewählt ist aus H und -COOR⁴, und
- R⁴: jeweils C₁-C₂₀-Alkyl ist.

Als C₁-C₈-Alkoxyrest wird hierbei ein Rest der allgemeinen Formel R-O- bezeichnet, wobei ein R ein Alkylrest mit 1 bis 8 Kohlenstoffatomen ist. Als C₁-C₈-Acyloxyrest wird hierbei ein Rest der allgemeinen Formel R-CO-O- bezeichnet, wobei R Wasserstoff oder ein Alkylrest mit 1 bis 7 Kohlenstoffatomen ist.

Vorzugsweise sind zwei oder drei Reste R¹ jeweils C₁-C₈-Alkoxygruppen und der gegebenenfalls verbleibende Rest R¹ ist eine C₁-C₈-Alkylgruppe.

Besonders bevorzugt ist jeder Rest R¹ jeweils unabhängig voneinander ausgewählt aus Methyl, Ethyl, Methoxy und Ethoxy.

Die Zahl n ist vorzugsweise 1 oder 3.

X ist vorzugsweise -NHR².

R² ist vorzugsweise ausgewählt aus C₁-C₆-Alkyl, -CH₂CH₂CN oder -CHR³CH₂COOR⁴, wobei R³ ausgewählt ist aus H und -COOR⁴, und R⁴ jeweils C₁-C₆-Alkyl ist.

Besonders bevorzugt ist R² ausgewählt aus C₁-C₆-Alkyl, oder -CHR³CH₂COOR⁴, wobei R³ die Bedeutung -COOR⁴ hat, und R⁴ jeweils C₁-C₆-Alkyl ist.

In einer besonders bevorzugten Ausführungsform hat R² die Bedeutung -CHR³CH₂COOR⁴, wobei R³ eine Gruppe -COOR⁴ ist, und R⁴ jeweils C₁-C₆-Alkyl ist.

Die vorliegende Erfindung betrifft außerdem eine feuchtigkeitshärtende Zusammensetzung, die die oben beschriebene Polymerzusammensetzung enthält. Vorzugsweise handelt es sich bei der erfindungsgemäßen feuchtigkeitshärtenden Zusammensetzung um einen Klebstoff, Dichtstoff oder Beschichtungsstoff. Besonders bevorzugt handelt es sich um einen Dicht- oder Klebstoff.

Die erfindungsgemäße feuchtigkeitshärtende Zusammensetzung enthält in der Regel zusätzlich zu der oben beschriebenen Polymerzusammensetzung mindestens einen Zusatzstoff ausgewählt aus einem oder mehreren Füllstoffen, einem oder mehreren Vernetzungskatalysatoren, einem oder mehreren Haftvermittlern und/oder einem oder mehreren Weichmachern.

In einer Ausführungsform enthält die feuchtigkeitshärtende Zusammensetzung die oben beschriebene Polymerzusammensetzung und mindestens einen Vernetzungskatalysator. In einer Ausführungsform enthält die feuchtigkeitshärtende Zusammensetzung die oben beschriebene Polymerzusammensetzung und mindestens einen Füllstoff. In einer weiteren Ausführungsform enthält die feuchtigkeitshärtende Zusammensetzung die oben beschriebene Polymerzusammensetzung, mindestens einen Vernetzungskatalysator und mindestens einen Füllstoff.

Die feuchtigkeitshärtende Zusammensetzung wird vorzugsweise unter Ausschluss von Feuchtigkeit hergestellt und aufbewahrt. Typischerweise ist die feuchtigkeitshärtende Zusammensetzung lagerstabil, d.h., sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmaß verändert. Üblicherweise wird die Lagerstabilität über die Messung der Viskosität oder der Auspresskraft ermittelt.

Bei der bestimmungsgemäßen Applikation feuchtigkeitshärtenden Zusammensetzung kommen die in der erfindungsgemäßen Polymerzusammensetzung enthaltenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz eines Vernetzungskatalysators beschleunigt werden können, härtet die feuchtigkeitshärtende Zusammensetzung schließlich aus. Dieser Prozess wird auch als Vernetzung bezeichnet. Das für die Aushärtung benötigte Wasser kann entweder aus der Luft stammen (Luftfeuchtigkeit) oder in den beschichteten Substraten vorhandener Feuchtigkeit sein oder aber die feuchtigkeitshärtende Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der feuchtigkeitshärtenden Zusammensetzung bei der Applikation eine Wasser enthaltende Komponente zugesetzt werden, zum Beispiel in Form einer wasserhaltigen Paste.

Die erfindungsgemäße feuchtigkeitshärtende Zusammensetzung weist nach Herstellung vorzugsweise einen besonders geringen Wasseranteil auf. Vorzugsweise beträgt der Wassergehalt der feuchtigkeitshärtenden Zusammensetzung bis zu 0,1 Gew.-%, bevorzugt bis zu 0,05 Gew.-%, besonders bevorzugt bis zu 0,01 Gew.-%, bezogen auf das Gesamtgewicht der Zusammensetzung. Der Wassergehalt wird hierbei gemäß DIN EN ISO 15512:2017-03, Verfahren B2 bestimmt.

Um den genannten geringen Wasseranteil zu erreichen, bedarf es in der Regel nicht der Zugabe weiterer Trocknungsmittel. Insbesondere betrifft dies reaktive Trocknungsmittel, also Verbindungen, die mit dem in der feuchtigkeitshärtenden Zusammensetzung vorhanden Wasser reagieren.

Vorzugsweise wird erfindungsgemäß auf die Zugabe weiterer Trocknungsmittel, insbesondere reaktiver Trocknungsmittel vollständig verzichtet. Reaktive Trocknungsmittel sind solche, deren Trocknungswirkung auf eine Reaktion mit Wasser zurückzuführen ist. Vorzugsweise wird auf die Zugabe insbesondere reaktiver Trocknungsmittel, welche nicht der am 01.01.2017 gültigen OECD Polymerdefinition genügen, insbesondere Alkylsilane und Vinylgruppen-haltige Silane, wie beispielsweise Vinyltrimethoxysilan oder Vinyltriethoxysilan verzichtet. Als Vinylgruppen-haltige Silane werden in diesem Zusammenhang Verbindungen bezeichnet, die mindestens eine SiCH=CH₂-Gruppe umfassen. Insbesondere fallen unter diesen Begriff Vinyltrialkoxysilane und die Reaktionsprodukte, die bei der Reaktion dieser Silane mit Wasser entstehen, bzw. Teilhydrolysate dieser Verbindungen. Als reaktives Trockenmittel wird dabei generell ein Trockenmittel verstanden, welches mit Wasser eine chemische Reaktion eingeht. Demgegenüber binden physikalische Trockenmittel Wasser, sodass es nicht für eine chemische Reaktion zur Verfügung steht. Beispiele für ein physikalisches Trockenmittel sind spezielle Füllstoffe wie Zeolithe oder Molsiebe.

In einer Ausführungsform umfasst eine erfindungsgemäße feuchtigkeitshärtende Zusammensetzung nach Herstellung und vor Applikation nur bis zu 1 Gew.-%, vorzugsweise bis zu 0,8 Gew.-%, besonders bevorzugt bis zu 0,5 Gew.-% Vinylgruppen-haltige Silane und/oder Alkylsilane, bezogen auf das Gesamtgewicht der feuchtigkeitshärtenden Zusammensetzung. Insbesondere umfasst die feuchtigkeitshärtende Zusammensetzung vorzugsweise jeweils nur bis zu 1 Gew.-%, bevorzugt bis zu 0,8 Gew.-%, besonders bevorzugt bis zu 0,5 Gew.-% Vinyltrimethoxysilan und Vinyltriethoxysilan.

In anderen Worten kann die Menge der zur Herstellung der feuchtigkeitshärtenden Zusammensetzung eingesetzten Vinylgruppen-haltigen Silane und/oder Alkylsilane auf die angegebenen Gewichtsanteile beschränkt bzw. kann vorzugsweise sogar vollständig auf den Einsatz Vinylgruppenhaltiger Silane verzichtet werden.

In einer bevorzugten Ausführungsform enthält die feuchtigkeitshärtende Zusammensetzung keine Vinylgruppen-haltigen Silane und/oder Alkylsilane bzw. keine bei der Reaktion dieser Silane mit Wasser entstehenden Reaktionsprodukte. "Keine" bedeutet hier, dass die einzelnen Konzentrationen der Vinylgruppen-haltigen Silane und/oder Alkylsilane jeweils <0,1 Gewichts-% bezogen auf die feuchtigkeitshärtende Zusammensetzung nicht überschreiten.

Die feuchtigkeitshärtende Zusammensetzung weist vorzugsweise eine Viskosität bei 23° C von weniger als 100 Pa·s gemessen nach der Vorschrift der DIN EN ISO 3219/B3 bei einer Scherrate von 40/s auf. Die Viskosität der feuchtigkeitshärtenden Zusammensetzung wird maßgeblich von dem Mischungsverhältnis von silanfunktionellen Polymer und Füllstoff sowie der Art des Füllstoffes bestimmt und kann ggf. durch Zugabe eines Weichmachers modifiziert werden. Durch die oben beschriebenen Eigenschaften der erfindungsgemäßen Polymerzusammensetzung kommt es auch bei längerer Lagerung der Zusammensetzung zu keiner wesentlichen Änderung der Viskosität, woraus sich eine hohe Lagerstabilität der Zusammensetzung ergibt.

Die feuchtigkeitshärtende Zusammensetzung umfasst vorzugsweise mindestens einen Füllstoff, welcher insbesondere dazu dient, die rheologischen Eigenschaften und mechanischen Eigenschaften der Zusammensetzung im nicht ausgehärteten sowie im ausgehärteten Zustand zu beeinflussen.

Als Füllstoffe eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quarz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet. Darüber hinaus eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis sind beispielsweise unter den Bezeichnungen Expancel® oder Dualite® kommerziell erhältlich. Diese sind aus anorganischen oder organischen Stoffen zusammengesetzt, jede mit einem Durchmesser von 1 mm oder weniger, bevorzugt von 500 µm oder weniger.

Beispielsweise wird als Füllstoff eine hochdisperse Kieselsäure mit einer BET-Oberfläche von 10 bis 500 m²/g eingesetzt. Bei ihrer Verwendung bewirkt eine derartige Kieselsäure keine wesentliche Erhöhung der Viskosität der erfindungsgemäßen Zusammensetzung, trägt aber zu einer Verstärkung der gehärteten Zubereitung bei. Über diese Verstärkung werden zum Beispiel die Anfangsfestigkeiten, Zugscherfestigkeiten und die Adhäsion der Kleb-, Dicht- oder Beschichtungsstoffe, in denen die erfindungsgemäße Zusammensetzung verwendet wird, verbessert. Bevorzugt werden ungecoatete Kieselsäuren mit einer BET-Oberfläche von kleiner als 100, stärker bevorzugt von kleiner als 65 m²/g, und/oder gecoatete Kieselsäuren mit einer BET-Oberfläche 100 bis 400, stärker bevorzugt von 100 bis 300, insbesondere von 150 bis 300 und ganz besonders bevorzugt von 200 bis 300 m²/g eingesetzt.

Als Zeolithe werden bevorzugt Alkali-Alumosilikate eingesetzt, beispielsweise Natrium-Kalium-Alumosilikate der allgemeinen Summenformel aK₂O*bNa₂O*Al₂O₃*2SiO*nH₂O mit 0 < a, b < 1 und a + b = 1. Vorzugsweise ist die Porenöffnung des eingesetzten Zeoliths beziehungsweise der eingesetzten Zeolithe gerade groß genug, um Wassermoleküle aufzunehmen. Dementsprechend ist eine effektive Porenöffnung der Zeolithe von weniger als 0,4 nm bevorzugt. Besonders bevorzugt beträgt die effektive Porenöffnung 0,3 nm ± 0,02 nm. Der/die Zeolith(e) wird/werden vorzugsweise in Form eines Pulvers eingesetzt.

In einer Ausführungsform umfasst der Füllstoff natürlich vorkommende Silikate (beispielsweise Ton, Lehm, Talk, Glimmer, Kaolin), Carbonate (beispielsweise Kreide, Dolomit), Sulfate (beispielsweise Baryt), Quarzsand, Kieselsäure (insbesondere gefällte der pyrogene Kieselsäure), Metallhydroxide (beispielsweise Aluminiumhydroxid, Magnesiumhydroxid), Metalloxide (beispielsweise Zinkoxid, Calciumoxid, Aluminiumoxid) und/oder Ruß.

Bevorzugt wird Kreide als Füllstoff verwendet. Als Kreide können dabei kubische, nicht kubische, amorphe und andere Modifikationen von Magnesium- und/oder Calciumcarbonat eingesetzt werden. Vorzugsweise sind die eingesetzten Kreiden oberflächenbehandelt beziehungsweise beschichtet. Als Beschichtungsmittel hierfür werden bevorzugt Fettsäuren, Fettsäureseifen und Fettsäureester eingesetzt, beispielsweise Laurinsäure, Palmitinsäure oder Stearinsäure, Natrium- oder Kaliumsalze solcher Säuren oder ihre Alkylester. Darüber hinaus kommen aber auch andere oberflächenaktive Substanzen wie Sulfatester langkettiger Alkohole oder Alkylbenzolsulfonsäuren beziehungsweise deren Natrium- oder Kaliumsalze oder auch Kopplungsreagenzien auf der Basis von Silanen oder Titanaten in Frage. Mit der Oberflächenbehandlung der Kreiden ist häufig eine Verbesserung der Verarbeitbarkeit sowie der Klebkraft und auch der Wetterresistenz der Zusammensetzungen verbunden. Das Beschichtungsmittel hierfür wird üblicherweise in einem Anteil von 0,1 bis 20 Gew.-%, bevorzugt 1 bis 5 Gew.-%, bezogen auf das Gesamtgewicht der Rohkreide, eingesetzt.

Je nach angestrebtem Eigenschaftsprofil können gefällte oder gemahlene Kreiden oder Gemische davon verwendet werden. Gemahlene Kreiden können zum Beispiel aus natürlichem Kalk, Kalkstein oder Marmor durch mechanisches Zermahlen hergestellt werden, wobei trockene oder feuchte Methoden zur Anwendung gelangen können. Je nach Mahlverfahren werden Fraktionen mit unterschiedlicher durchschnittlicher Teilchengröße erhalten. Vorteilhafte spezifische Oberflächenwerte (BET) liegen zwischen 1,5 m²/g und 50 m²/g.

Die zur Herstellung der Zusammensetzung eingesetzten Füllstoffe weisen üblicherweise einen gewissen Anteil an Wasser auf. Im Falle der aus dem Stand der Technik bekannten silanfunktionellen Polymere ist dies von Nachteil, da das im Füllstoff vorhandene Wasser zu einer Vorvernetzung der silanfunktionellen Polymere bereits während der Lagerung der Zusammensetzung führt. Aus diesem Grund werden im Stand der Technik der Zusammensetzung entweder zusätzliche Trocknungsmittel zugegeben, oder nur wasserfreie Füllstoffe eingesetzt. Da das erfindungsgemäße silanfunktionellen Polymer gleichzeitig als Trocknungsmittel wirkt, kann zur Herstellung der erfindungsgemäßen Zusammensetzung auch ein Füllstoff, der einen gewissen Anteil Wasser enthält, eingesetzt werden, ohne dass dies negative Auswirkungen auf die Lagerstabilität der Zusammensetzung hat.

In einer Ausführungsform umfasst der für die Herstellung der Zusammensetzung eingesetzte Füllstoff deshalb Wasser. Vorzugsweise umfasst der Füllstoff Wasser in einer Menge von bis zu 1 Gew.-%, bevorzugt 0,01 bis 0,5 Gew.-%, besonders bevorzugt 0,1 bis 0,3 Gew.-%, bezogen auf die Masse des Füllstoffes, gemessen nach der Vorschrift in/der DIN EN ISO 15512:2017-03, Verfahren B2.

Der Anteil an Füllstoff in der feuchtigkeitshärtenden Zusammensetzung beträgt vorzugsweise 10 bis 80 Gew.-%, bevorzugt 20 bis 70 Gew.-%, besonders bevorzugt 40 bis 70 Gew.-%, bezogen auf das Gesamtgewicht der feuchtigkeitshärtenden Zusammensetzung.

Die feuchtigkeitshärtende Zusammensetzung umfasst vorzugsweise mindestens einen Haftvermittler. Unter einem Haftvermittler wird eine Substanz verstanden, die die Haftungseigenschaften von Klebeschichten auf Oberflächen verbessert. Es können übliche, dem Fachmann bekannte Haftvermittler (Tackifier) allein oder als Kombination mehrerer Verbindungen eingesetzt werden. Geeignet sind beispielsweise Harze, Terpen-Oligomere, Cumaron-/Inden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- od. β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden auch Copolymere aus Terpenen und anderen Monomeren, beispielsweise Styrol, α-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Haftvermittler im oben genannten Sinne geeignet sind die Kolophoniumharze und deren Derivate, beispielsweise deren Ester oder Alkohole.

Besonders gut geeignet sind Silan-Haftvermittler, insbesondere Aminosilane.

In einer Ausführungsform umfasst die feuchtigkeitshärtende Zusammensetzung als Haftvermittler eine Verbindung der allgemeinen Formel (II)

R¹₃SiR²N(R³)₂ (II),

wobei
- R¹: jeder Rest jeweils unabhängig voneinander ausgewählt ist aus C₁-C₈-Alkyl, C₁-C₈-Alkoxy oder C₁-C₈-Acyloxy und mindestens ein Rest R¹ ein C₁-C₈-Alkoxy- oder C₁-C₈-Acyloxyrest ist,
- R²: ein zweibindiger und gegebenenfalls ein oder mehrere Heteroatome enthaltender Kohlenwasserstoffrest mit 1 bis 12 C-Atomen ist, und
- R³: jeder Rest jeweils unabhängig voneinander ausgewählt ist aus H und C₁-C₈-Alkyl.

Derartige Verbindungen weisen naturgemäß eine hohe Affinität zu den bindenden Polymerkomponenten der feuchtigkeitshärtenden Zusammensetzung, aber auch zu einer großen Bandbreite an polaren sowie unpolaren Oberflächen auf und tragen deshalb zur Ausbildung einer besonders stabilen Haftung zwischen dem Dicht- oder Klebstoff und den jeweils zu verbindenden Substraten bei.

Bei der Gruppe R² kann es sich beispielsweise um einen geradkettigen, verzweigten oder cyclischen, substituierten oder unsubstituierten Alkylenrest handeln. Gegebenenfalls ist als Heteroatom darin Stickstoff (N) oder Sauerstoff (O) enthalten. Die Gruppe R² kann insbesondere eine Acetoxygruppe -O-CO-R umfassen, wobei R ein zweibindiger Kohlenwasserstoffrest ist.

In einer besonderen Ausführungsform wird als Haftvermittler ein Oligomer eines Aminosilans eingesetzt, insbesondere eignen sich Oligomere von Aminosilanen, in denen die Siliciumatome über Siloxanbindungen verbunden sind. Insbesondere eignen sich oligomere Diaminosilane wie beispielsweise Dynasilan® 1146 der Firma Evonik. Auch Teilhydrolysate von Aminosilanen oder anderen Silanen sind geeignet. Vorzugsweise werden oligomere Silane eingesetzt.

Der Anteil an Haftvermittler in der feuchtigkeitshärtenden Zusammensetzung beträgt vorzugsweise 0,1 bis 5 Gew.-%, bevorzugt 0,2 bis 3 Gew.-%, besonders bevorzugt 0,5 bis 1,5 Gew.-%, bezogen auf das Gesamtgewicht der feuchtigkeitshärtenden Zusammensetzung.

Werden als Haftvermittler Verbindungen mit reaktiven Silangruppen eingesetzt, so können diese zusätzlich die Lagerstabilität der feuchtigkeitshärtenden Verbindung beeinflussen, sind aber zur Erreichung der Lagerstabilität nicht unbedingt notwendig.

In einer besonderen Ausführungsform enthalten die feuchtigkeitshärtenden Zusammensetzungen jeweils weniger als 0,1 Gew.-% von Silan-Haftvermittlern und Trockenmitteln, welche nicht der am 01.01.2017 gültigen OECD Polymerdefinition genügen welche nicht der am 01.01.2017 gültigen OECD Polymerdefinition genügen.

In einer Ausführungsform umfasst die feuchtigkeitshärtende Zusammensetzung außerdem mindestens einen Katalysator für die Vernetzung von silanfunktionellen Polymeren (Vernetzungskatalysator). Dieser Katalysator erleichtert die Reaktion silanfunktionellen Polymers mit Wasser und die daraus folgende Kondensationsreaktion zur Bildung vernetzter Polysiloxane. Als Vernetzungskatalysator können die im Stand der Technik bekannten Katalysatoren verwendet werden. Beispielsweise sind dies Lewis- und/oder Bronstedt-Säuren bzw. Basen. Bei dem Katalysator kann es sich beispielsweise um einen Metallkatalysator oder eine stickstoffhaltige Verbindung handeln.

Geeignete Metallkatalysatoren sind insbesondere Organozinnverbindungen, Organotitanate, Organozirconate und Organoaluminate. Die Organotitanate, Organozirconate und Organoaluminate weisen bevorzugt Liganden auf, welche ausgewählt sind aus einer Alkoxygruppe, Sulfonatgruppe, Carboxylatgruppe, Dialkylphosphatgruppe, Dialkylpyrophosphatgruppe und Acetylacetonatgruppe, wobei alle Liganden identisch oder verschieden voneinander sein können.

Geeignete stickstoffhaltige Verbindungen sind beispielsweise Amidine; Amine wie insbesondere N-Ethyl-diisopropylamin, N,N,N',N'-Tetramethylalkylendiamine, Polyoxyalkylenamine, 1,4-Di-azabicyclo[2.2.2]octan; Aminosilane wie 3-Amino-propyl-trimethoxysilan, 3-Aminopropyldimethoxymethylsilan, N-(2-Aminoethyl)-3-aminopropyl-trimethoxysilan, N-(2-Aminoethyl)-3-amino-propyl-methyldimethoxysilan, N-(2-Aminoethyl)-N'-[3-(trimethoxysilyl)propyl]ethylendiamin sowie deren Analoga mit Ethoxy- oder Isopropoxy- anstelle der Methoxygruppen am Silicium.

Besonders bevorzugte Vernetzungskatalysatoren sind Organotitanate und Amidine.

Bevorzugte Organotitanate sind insbesondere Bis(ethylacetoacetato)-diisobutoxy-titan(IV), Bis-(ethylacetoacetato)-diisopropoxy-titan(IV), Bis(acetylacetonato)-diisopropoxy-titan(IV), Bis(acetylacetonato)-diisobutoxy-titan(IV), Tris(oxyethyl)-amin-isopropoxy-titan(IV), Bis[tris(oxyethyl)-amin]-diisopropoxytitan(IV), Bis(2-ethylhexan-1,3-dioxy)-titan(IV), Bis(neopentyl(diallyl)oxy-di-ethoxytitan(IV), Tris[2-((2-aminoethyl)amino)ethoxy]-ethoxy-titan(IV), Titan(IV)-tetrabutanolat, Tetra-(2-ethylhexyloxy)titanat, Tetra-(isopropoxy)titanat und Polybutyltitanat.

Bevorzugte Amidine sind insbesondere 1,8-Diazabicyclo[5.4.0]undec-7-en (DBU), 1,5-Diazabi-cyclo[4.3.0]non-5-en (DBN), 6-Dibutylamino-1,8-diazabicyclo[5.4.0]-undec-7-en; Methyltriazabicyclodecen, Guanidine wie Tetramethylguanidin, 2-Guanidinobenzimidazol, Acetylacetoneguanidin, 1,3-Di-o-tolylguanidin, 1,3-Diphenylguanidin, Tolylbiguanidin, 2-tert.Butyl-1,1,3,3-tetramethylguanidin; und Imidazole wie N-(3-Trimethoxysilylpropyl)-4,5-dihydroimidazol und N-(3-Triethoxysilylpropyl)-4,5-dihydroimidazol.

Es können Gemische von Katalysatoren zum Einsatz kommen, insbesondere Gemische von Metallkatalysatoren und Nichtmetallkatalysatoren, die ein Stickstoffatom enthalten, wobei die Metallkatalysatoren bevorzugt kein Zinn enthalten und es sich bei den Nichtmetallkatalysatoren um Amidine handelt.

In einer Ausführungsform enthält deshalb die feuchtigkeitshärtenden Zusammensetzung weniger als 0,1% Zinn (berechnet auf Gewichtsanteil Zinnatome). Insbesondere beträgt der Zinngehalt der Zusammensetzung weniger als 0.06 Gew.-%, insbesondere weniger als 0.01 Gew.-%. Dabei wird bevorzugt auch der für die Herstellung der erfindungsgemäßen Polymerzusammensetzung eingesetzte Katalysator entsprechend ausgewählt oder weggelassen, sodass dies gewährleistet ist.

Der Anteil an Vernetzungskatalysator in der feuchtigkeitshärtenden Zusammensetzung beträgt vorzugsweise 0,001 bis 5 Gew.-%, bevorzugt 0,005 bis 1 Gew.-%, besonders bevorzugt 0,01 bis 0,5 Gew.-%, bezogen auf das Gesamtgewicht der Zusammensetzung.

In einer Ausführungsform umfasst die feuchtigkeitshärtende Zusammensetzung außerdem mindestens einen Weichmacher.

Beispiele für geeignete Weichmacher sind Ester organischer Carbonsäuren oder deren Anhydride, wie Fettsäurealkylester, Phthalate, z.B. Dioctylphthalat, Diisononylphthalat oder Diisodecylphthalat, Adipate, z.B. Dioctyladipat, Azelate und Sebacate, Polyole, z.B. Polyoxyalkylenpolyole oder Polyesterpolyole, organische Phosphor- und Sulfonsäureester, Mineralöle oder Polybutene. Auf den Einsatz von phthalathaltigen Weichmachern wird dabei vorzugsweise verzichtet.

Als Weichmacher werden bevorzugt Fettsäurealkylester, Alkylsulfonsäureester des Phenols, Mineralöle, Weichmacher auf Basis nachwachsender Rohstoffe, bei denen es sich ebenfalls um Fettsäurealkylester handeln kann, oder Kombinationen davon eingesetzt.

Beispiele für Weichmacher auf Basis nachwachsender Rohstoffe sind pflanzliche Öle, wie Rapsöl, Sojaöl und Palmöl, und Ester, insbesondere Methylester, von pflanzlichen Ölen, wie Rapsölmethylester, Sojamethylester und Palmölmethylester.

Beispiele für Weichmacher, die nicht auf nachwachsenden Rohstoffen basieren, aber phthalatfrei sind, sind 1,2-Cyclohexandicarbonsäurediisononylester, Alkylsulfonsäureester des Phenols und Polyether mit einer mittleren Molmasse von weniger als 4000 g/mol, wie beispielsweise Desmophen 2061 BD von Covestro Deutschland AG.

Der Weichmacher umfasst besonders bevorzugt 1,2-Cyclohexan-dicarbon-säurediisononylester (DINCH), Alkylsulfonsäureester des Phenols, Rapsölmethylester oder eine Kombination davon, wobei bevorzugt eine Kombination von 1,2-Cyclohexandicarbonsäurediisononylester und Rapsölmethylester verwendet wird.

Der Anteil an Weichmacher in der feuchtigkeitshärtenden Zusammensetzung beträgt vorzugsweise 1 bis 50 Gew.-%, bevorzugt 5 bis 30 Gew.-%, besonders bevorzugt 5 bis 25 Gew.-%, bezogen auf das Gesamtgewicht der feuchtigkeitshärtenden Zusammensetzung.

Weiterhin kann die feuchtigkeitshärtende Zusammensetzung zusätzlich weitere Bestandteile enthalten. Beispielsweise sind derartige Bestandteile Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 2002/048228 A2 auf den Seiten 9 bis 11 beschrieben sind, Polyamidwachse, hydrogenisiertes Rizinusöl, oder quellbare Kunststoffe wie PVC, Stabilisatoren, beispielsweise gegen Wärme, Licht- und UV-Strahlung; flammhemmende Substanzen; oberflächenaktive Substanzen wie Netzmittel, Verlaufsmittel, Entlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen. Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

Neben der erfindungsgemäßen Polymerzusammensetzung können auch weitere silanfunktionelle Polymere als Bestandteil der erfindungsgemäßen feuchtigkeitshärtenden Zusammensetzung enthalten sein. Besonders bevorzugt können solche silanfunktionellen Polymere zugesetzt werden, die über Silangruppen mit geringerer Reaktivität gegenüber Wasser verfügen. Beispielsweise sind dies solche Polymere, die aus der Reaktion von Polyolen mit Isocyanatosilanen hervorgegangen sind und solche welche erhältlich sind durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US-A 3,971,751 und US-B 6,207,766 , deren gesamte Offenbarung hiermit eingeschlossen ist. Beispielsweise sind geeignete silanfunktionelle Polymere kommerziell erhältlich unter den Handelsnamen MS Polymer™ S203H, S303H, S227, S327, MS Silyl™ SAX220, SAX 260, SAX350, SAX400, SAX 510, SAX 520, SAX 530, SAX 580, SAX 590, SAX725, MAX 602, MAX 923, MAX 951, Silyl™ SAT350 und SAT400, XMAP™ SA100S und SA310S von der Firma Kaneka Corp., Japan, sowie unter den Handelsnamen Excestar® S2410, S2420, S3430, S3630, W2450 und MSX931 von der Firma Asahi Glass Co, Ltd., Japan.

In einer Ausführungsform umfasst die feuchtigkeitshärtende Zusammensetzung
5 bis 50 Gew.-% der erfindungsgemäßen Polymerzusammensetzung;
10 bis 70 Gew.-% mindestens eines Füllstoffes; bis zu 5 Gew.-% mindestens eines Haftvermittlers;
0,001 bis 5 Gew.-% mindestens eines Vernetzungskatalysators; und bis zu 50 Gew.-% mindestens eines Weichmachers,
jeweils bezogen auf das Gesamtgewicht der feuchtigkeitshärtenden Zusammensetzung.

In einer weiteren Ausführungsform umfasst die feuchtigkeitshärtende Zusammensetzung
5 bis 25 Gew.-% der erfindungsgemäßen Polymerzusammensetzung;
5 bis 25 Gew.-% eines weiteren silanfunktionellen Polymers ohne Urethangruppen mit geringerer Reaktivivtät gegenüber Wasser ausgewählt aus den Produkten MS Polymer™ S203H, S303H, S227, S327, MS Silyl™ SAX220, SAX 260, SAX350, SAX400, SAX 510, SAX 520, SAX 530, SAX 580, SAX 590, SAX725, MAX 602, MAX 923, MAX 951, Silyl™ SAT350 und SAT400, XMAP™ SA100S und SA310S von der Firma Kaneka Corp., Japan, sowie unter den Handelsnamen Excestar® S2410, S2420, S3430, S3630, W2450 und MSX931 von der Firma Asahi Glass Co, Ltd., Japan.
10 bis 70 Gew.-% mindestens eines Füllstoffes; bis zu 5 Gew.-% mindestens eines Haftvermittlers;
0,001 bis 5 Gew.-% mindestens eines Vernetzungskatalysators; und bis zu 50 Gew.-% mindestens eines Weichmachers,
jeweils bezogen auf das Gesamtgewicht der feuchtigkeitshärtenden Zusammensetzung.

In einer weiteren Ausführungsform umfasst die feuchtigkeitshärtende Zusammensetzung
5 bis 25 Gew.-% der erfindungsgemäßen Polymerzusammensetzung;
5 bis 25 Gew.-% eines weiteren silanfunktionellen Polymers mit Urethangruppen ausgewählt aus den Produkten Geniosil® STPE- 15 und STPE-35 der Fa. Wacker, Desmoseal® S XP 2636, XP 2774, XP 2479 (Covestro)
10 bis 70 Gew.-% mindestens eines Füllstoffes; bis zu 5 Gew.-% mindestens eines Haftvermittlers;
0,001 bis 5 Gew.-% mindestens eines Vernetzungskatalysators; und bis zu 50 Gew.-% mindestens eines Weichmachers,
jeweils bezogen auf das Gesamtgewicht der feuchtigkeitshärtenden Zusammensetzung.

Die Erfindung betrifft darüber hinaus ein Verfahren zur Herstellung der erfindungsgemäßen Polymerzusammensetzung, umfassend die Schritte:
a) Umsetzung eines NCO-reaktiven Polymers, welches mindestens zwei NCO-reaktive Gruppen pro Molekül aufweist, mit einem Polyisocyanat, wobei das molare Verhältnis der Polyisocyanat-Moleküle zu den NCO-reaktiven Gruppen des NCO-reaktiven Polymers mindestens 1,25 : 1 beträgt; und
b) Umsetzung des Reaktionsproduktes aus Schritt a) mit einem NCO-reaktiven Silan.

Bei der Umsetzung des NCO-reaktiven Polymers mit dem Polyisocyanat werden vorzugsweise sämtliche NCO-reaktiven Gruppen des Polymers umgesetzt. Ebenso werden bei der Umsetzung des Reaktionsproduktes aus Schritt a) mit dem NCO-reaktiven Silan vorzugsweise sämtliche im Schritt a) noch nicht umgesetzte NCO-Gruppen umgesetzt.

Das molare Verhältnis der Polyisocyanat-Moleküle zu den NCO-reaktiven Gruppen des Polymers beträgt in Schritt a) des Herstellungsverfahrens vorzugsweise 1,25 bis 10, besonders bevorzugt 1,5 bis 7, am meisten bevorzugt 2 bis 5.

Die Umsetzung des Polyisocyanats mit dem NCO-reaktiven Polymer erfolgt dabei beispielsweise bei einer Temperatur von 20 bis 100°C, gegebenenfalls unter Zugabe eines geeigneten Katalysators, insbesondere eines Urethanisierungskatalysators, wie beispielsweise Dibutylzinndilaurat. Die Umsetzung des dabei entstehenden Reaktionsproduktes mit dem NCO-reaktiven Silan erfolgt beispielsweise bei einer Temperatur von 30 bis 100°C.

Aufgrund des hohen Verhältnisses von NCO-Gruppen zu NCO-reaktiven Gruppen lässt sich in vielen Fällen eine zügige Reaktion auch ohne Zugabe eines zinnhaltigen Katalysators durchführen, insbesondere wenn aromatische NCO-Gruppen, wie beispielsweise die der Toluyldiisocyanate, zur Reaktion kommen. Deshalb wird in einer bevorzugten Ausführungsform kein zinnhaltiger Katalysator eingesetzt, sondern zinnfreie Katalysatoren wie aus dem Stand der Technik bekannte Bismuth-, Zirconium- und/oder Titanverbindungen. In einer weiteren Ausführungsform wird die Umsetzung ganz ohne Katalysator durchgeführt.

In einer Ausführungsform erfolgt mindestens ein Schritt a) und oder b) in Gegenwart eines Weichmachers oder Lösungsmittels. Vorzugsweise wird jedoch auf die Zugabe von Weichmacher und/oder Lösungsmittel verzichtet.

Die Erfindung betrifft außerdem ein Verfahren zur Herstellung der erfindungsgemäßen feuchtigkeitshärtenden Zusammensetzung, wobei eine erfindungsgemäße Polymerzusammensetzung mit mindestens einem Füllstoff, mindestens einem Haftvermittler, mindestens einem Vernetzungskatalysator und/oder mindestens einem Weichmacher vermischt wird.

In einer Ausführungsform des Verfahrens wird die erfindungsgemäße Polymer-Zusammensetzung mit mindestens einem Füllstoff vermischt, welcher einen Wasseranteil von bis zu 1 Gew.-% aufweist, bevorzugt 0,01 bis 0,5 Gew.-%, besonders bevorzugt 0,1 bis 0,3 Gew.-%, bezogen auf das Gesamtgewicht des Füllstoffes.

In einer bevorzugten Ausführungsform des Verfahrens wird der feuchtigkeitshärtenden Zusammensetzung kein vinylgruppenhaltiges Silan zugegeben. In einer weiteren Ausführungsform des Verfahrens werden der feuchtigkeitshärtenden Zusammensetzung höchstens 1 Gew.-%, vorzugsweise bis zu 0,8 Gew.-%, besonders bevorzugt bis zu 0,5 Gew.-% Vinylgruppen-haltige Silane zugegeben, bezogen auf das Gesamtgewicht der feuchtigkeitshärtenden Zusammensetzung. Insbesondere enthält die Zusammensetzung weniger als 1,0 Gew.-% Vinyltrimethoxysilan und Vinyltriethoxysilan.

In einer weiteren Ausführungsform werden mehrere Alkyl- und/oder Vinylsilane zugegeben, wobei der Anteil eines jeden einzelnen bezogen auf das Gesamtgewicht der feuchtigkeitshärtenden Zusammensetzung 1,0%, insbesondere 0,1 Gew.- %, nicht übersteigt.

Die Erfindung betrifft schließlich auch die Verwendung der erfindungsgemäßen Polymer-Zusammensetzung als Trocknungsmittel für feuchtigkeitshärtende Klebstoffe, Dichtstoffe und Beschichtungsstoffe. Insbesondere wird betrifft dies auch die Verwendung der erfindungsgemäßen Polymer-Zusammensetzung als eine Kombination von Trocknungsmittel und Bindemittel für feuchtigkeitshärtende Klebstoffe, Dichtstoffe und Beschichtungsstoffe.

Die erfindungsgemäßen Polymer-Zusammensetzungen sind insbesondere als Trocknungsmittel für feuchtigkeitshärtende Klebstoffe zur Befestigung von Bodenbelägen geeignet, ganz besonders gut sind sie zur Verwendung in Parkettklebern einsetzbar.

### Beispiele

### Herstellung von Polymerzusammensetzungen

In einem 2 L-Sulfierbecher mit Deckel, Rührer, Thermometer und Stickstoffdurchfluss wurden die in Tabelle 1 unter "Menge NCO-reaktives Polymer" angegebene Mengen eines difunktionellen Propylenglykols der OH-Zahl 13,4 mg KOH/g (ermittelt nach DIN 53240-1 (2012)) (Acclaim® Polyol 8200 N der Covestro Deutschland AG; Leverkusen DE) mit den in Tabelle 1 unter "Menge Polyisocyanat" angegebenen Mengen Isophorondiisocyanat (IPDI, Desmodur® I, Covestro Deutschland AG, NCO-Gehalt 37,8%, Molare Masse 222 g/mol) bzw. Toluylendiisocyanat (TDI, Desmodur® T80, Covestro Deutschland AG, Molare Masse 174 g/mol, NCO-Gehalt 48,2%) bei 60 °C unter Zugabe der in Tabelle 1 unter "Menge Katalysator" angegebenen Mengen Dibutylzinndilaurat bis zur vollständigen Umsetzung der NCO-reaktiven Gruppen des NCO-reaktiven Polymers umgesetzt (siehe Reaktionszeit, Tabelle 1). Wahlweise wurde auf die Katalysatorzugabe verzichtet und die Reaktionstemperatur dafür auf 80°C erhöht (Beispiele P4 und P5). Nach Zugabe der in Tabelle 1 unter "Menge NCO-reaktives Silan" angegebenen Mengen von *N*-(3-Trimethoxy-silylpropyl)asparaginsäure-diethylester (hergestellt gemäß EP-A 0 596 360, Bsp. 5) wurde die Mischung weiter gerührt, bis im IR Spektrum keine Isocyanatbande mehr zu sehen war.

Die Stoffmenge NCO-reaktiver Gruppen im NCO-reaktiven Polymer wurde wie folgt berechnet: OH-Zahl in mg KOH/g Polymer ermittelt nach DIN 53240-1 geteilt durch 1000 (mg/g) und die Molare Masse KOH (56,1 g/mol) multipliziert mit der Masse an NCO-reaktiven Polymer. Beispiel P1: (13,4 mg/g) / (1000 mg/g) / (56,1 g/mol) * (1037,6 g) = 0,248 mol.

Die Stoffmenge des Polyisocyanates wurde wie folgt berechnet:
Masse Polyisocyanat in g/mol geteilt durch Molmasse des Polyisocyanates.
Beispiel P1: 82,6 g / 222 g/mol = 0,372 mol.

Das Verhältnis der Stoffmengen des Polyisocyanates zur Stoffmenge NCO-reaktiver Gruppen wurde wie folgt berechnet: Stoffmenge des Polyisocyanates in mol geteilt durch Stoffmenge NCO-reaktiver Gruppen im NCO-reaktiven Polymer. Beispiel P1: 0,372 mol / 0,248 mol = 1,5.

Die Viskosität der erhaltenen Polymerzusammensetzungen wurde gemäß der Vorschrift in DIN EN ISO 3219/B3 mit einem Physica MCR 51 Rheometer der Fa. Anton Paar Germany GmbH (D) bestimmt.

**Tabelle 1**

| **Polymerzusammensetzung** | **P1** | **P2** | **P3** | **P4** | **P5** |
|---|---|---|---|---|---|
| | | | VB | | VB |
| Menge NCO-reaktives Polymer [g] | 1037,6 | 880,1 | 880,1 | 880,1 | 880,1 |
| Stoffmenge NCO-reaktives Polymer [mol] | 0,124 | 0,105 | 0,105 | 0,105 | 0,105 |
| Stoffmenge NCO-reaktiver Gruppen im NCO-reaktiven Polymer [mol] | 0,248 | 0,210 | 0,210 | 0,210 | 0,210 |
| Polyisocyanat | IPDI | IPDI | IPDI | TDI | TDI |
| Menge Polyisocyanat [g] | 82,6 | 116,8 | 46,7 | 91,4 | 36,6 |
| Stoffmenge Polyisocyanat [mol] | 0,372 | 0,526 | 0,210 | 0,526 | 0,210 |
| Verhältnis Polyisocyanat zu Stoffmenge NCO-reaktiver Gruppen im NCO-reaktiven Polymer | 1,5 | 2,5 | 1,0 | 2,5 | 1,0 |
| Katalysator, Menge [g] | 0,04 | 0,04 | 0,04 | - | - |
| Reaktionszeit [h] | 5 | 5 | 5 | 5 | 32 |
| Reaktionstemperatur [°C] | 60 | 60 | 60 | 80 | 80 |
| Menge NCO-reaktives Silan [g] | 177,1 | 300,5 | 74,81 | 300,5 | 74,81 |
| Viskosität [Pa·s] | 26 | 21 | 45 | 22 | 30 |

| | | | | | |
|---|---|---|---|---|---|
| VB: Vergleichsbeispiel | | | | | |

Wie die Vergleichszusammensetzung P3 zeigt, weist die mit einem geringen Verhältnis von Polyisocyanat zu NCO-reaktiven Gruppen hergestellte Polymerzusammensetzung eine höhere Viskosität als die erfindungsgemäßen Polymerzusammensetzungen P1 und P2 auf. Gleiches gilt für die Vergleichszusammensetzung P5 im Vergleich zur erfindungsgemäßen Zusammensetzung P4. Zudem zeigt die Vergleichszusammensetzung P5, dass bei einem niedrigen Verhältnis von Polyisocyanat zu NCO-reaktiven Gruppen nicht auf den Katalysator verzichtet werden kann, weil ohne den Einsatz eines Katalysators die Reaktionszeit bis zur vollständigen Umsetzung der NCO-reaktiven Gruppen des NCO-reaktiven Polymers signifikant länger ist. Bei einem hohen Verhältnis von Polyisocyanat zu NCO-reaktiven Gruppen werden die NCO-reaktiven Gruppen des NCO-reaktiven Polymers hingegen auch ohne Zugabe eines Katalysators in relativ kurzer Zeit umgesetzt.

### Herstellung der Polymerzusammensetzung P6 (Vergleichsbeispiel)

Zu der oben beschriebenen Polymerzusammensetzung P3 wurde weiteres Isophorondiisocyanat (IPDI, Desmodur® I, Covestro Deutschland AG, NCO-Gehalt 37,8%, Molare Masse 222 g/mol) zugegeben und mit *N*-(3-Trimethoxysilylpropyl)asparaginsäure-diethylester gemäß der Lehre der DE 10 2005 026 085 A1 zu einem Harnstoffderivat umgesetzt. Die verwendeten Mengen an IPDI und *N*-(3-Trimethoxysilylpropyl)asparaginsäure-diethylester wurden dabei so gewählt, dass die relativen Mengen der eingesetzten Rohstoffe einschließlich der für die Herstellung der Polymerzusammensetzung P3 eingesetzten Rohstoffe genau denen der erfindungsgemäßen Polymerzusammensetzung P2 entsprachen. Insbesondere entsprach also das Verhältnis von IPDI zu NCO-reaktiven Gruppen im Polyol demjenigen der erfindungsgemäßen Polymerzusammensetzung P2. Die somit erhaltene Polymerzusammensetzung hatte eine hohe Viskosität von 45 Pa·s. Dieses Beispiel zeigt, dass die erfindungsgemäße Polymerzusammensetzung über eine geringere Viskosität verfügt als eine aus dem gleichen Ausgangsstoffen gemäß der Lehre der DE 10 2005 026 085 A1 hergestellte Zusammensetzung.

### Herstellung feuchtigkeitshärtender Zusammensetzungen ohne Zugabe von Vinylsilanen

### Beispiel FZ-1 (erfindungsgemäß)

Eine feuchtigkeitshärtende Zusammensetzung auf Basis der Polymerzusammensetzung P1 wurde gemäß der folgenden Vorschrift hergestellt: 578,8 g von zuvor 16 Stunden bei 100°C im Umlufttrockenschrank auf einen Wassergehalt von 0,08 Gew.-% getrocknetem Füllstoff Omyalite® 95 T (Calciumcarbonat, Firma Omya) werden mit 136,2 g Weichmacher (Mesamoll®, Firma Lanxess, Wassergehalt 0,03 Gew.-%), 275,5 g Polymerzusammensetzung P1 (Tabelle3), 8,4 g Cab-O-Sil® TS 720 (hydrophobe pyrogene Kieselsäure, Firma Cabot, Wassergehalt 0,11 Gew.-%) und 3 g 1,8-Diazabicyclo[5.4.0]undec-7-en (Sigma-Aldrich Co. LLC) im Labordissolver mit Butterflyrührer (200 Umdrehungen/min) und Dissolverscheibe (2500 Umdrehungen/min) für 15 min unter statischem Vakuum und Kühlung dispergiert. Unter statischem Vakuum wird hierbei verstanden, dass die Apparatur bis auf einen Druck von 200 mbar evakuiert wird (dynamisches Vakuum) und danach die Verbindung zur Vakuumpupe getrennt wird. Die Kühlung wurde so gewählt, dass während der ganzen Herstellung eine Temperatur von 65°C nicht überschritten wurde.

### Beispiel FZ-2 (Vergleichsbeispiel)

Analog zu FZ-1 wurde eine feuchtigkeitshärtende Zusammensetzung hergestellt, mit dem Unterschied, dass anstelle von Polymerzusammensetzung P1 nun Polymerzusammensetzung P3 verwendet wurde.

### Beispiel FZ-3 (Vergleichsbeispiel)

Zusammensetzung FZ-3 wurde analog zu FZ-2 hergestellt, wobei zusätzlich Vinyltrimethoxysilan als Trocknungsmittel (Dynasilan® VTMO, Evonik) und ein Haftvermittler (Dynasilan® 1146, Evonik) zugegeben wurden.

Die Zusammensetzungen FZ-1 bis FZ-3 wurden wie im Folgenden beschrieben auf ihre Lagerstabilität (Viskositätsanstieg) und Reaktivität (Hautbildezeit) untersucht. Die Ergebnisse sind in folgender Tabelle gezeigt.

### Bestimmung von Viskosität, Shore-Härte, Reißdehnung und Zugfestigkeit

Die feuchtigkeitshärtenden Zusammensetzungen wurden nach 7 Tagen Lagerung in einer Kartusche mit Hilfe eines Rakels zu Membranen mit einer gleichmäßigen Schichtdicke von 2 mm auf eine Polyethylen-Folie aufgebracht und für 14 Tage bei 23°C und 50% Luftfeuchtigkeit ausgehärtet, wobei die Membranen nach 7 Tagen von der Folie gelöst und gewendet wurden. Anschließend wurden die Eigenschaften dieser Membranen anhand der folgenden Verfahren bestimmt.

Die Bestimmung der Viskosität nach sieben bzw. 60 Tagen Lagerung erfolgte nach der Vorschrift in DIN DIN EN ISO 3219/B3 bei einer Scherrate von 40/s.

Die Prüfung der Shore-A-Härte erfolgte an den Membranen nach der Vorschrift in DIN ISO 7619-1. Für die Ermittlung der Shore-A-Härte wurden drei Membranen aufeinander gelegt, um eine Schichtdicke von 6 mm zu gewährleisten.

Die Bestimmung der Reißdehnung und der Zugfestigkeit erfolgte durch einen Zugversuch gemäß der Vorschrift in DIN 53 504 an S2-Schulterstäben, die mit einer Formstanze aus den wie oben beschrieben hergestellten Membranen gestanzt wurden. Die Prüfgeschwindigkeit betrug 200 mm/min.

### Bestimmung der Hautbildezeit

Mittels eines Rakels (200 µm) wurde ein Film des Klebstoffs auf eine vorher mit Ethylacetat gereinigte Glasplatte aufgetragen und sofort in einen Drying Recorder (BK 3 Drying Recorder, BYK-Gardner) eingelegt. Die Nadel wurde mit 10 g belastet und über einen Zeitraum von 24 Stunden über eine Strecke von 35 cm bewegt. Der Drying Recorder befand sich in einem Klimaraum bei 23 °C und 50 % rel. Luftfeuchte. Als Hautbildezeit wurde der Zeitpunkt des Verschwindens der permanenten Spur der Nadel aus dem Film angegeben.

### Bestimmung des Wassergehaltes

Die Bestimmung des Wassergehaltes erfolgte gemäß DIN EN ISO 15512:2017-03, Verfahren B2.

### Bestimmung der Zugscherfestigkeit

Die Bestimmung der Zugscherfestigkeit erfolgte gemäß DIN EN 14293, Lagerungsfolge b).

**Tabelle 2**

| **Feuchtigkeitshärtende Zusammensetzung** | **FZ-1** | **FZ-2** | **FZ-3** |
|---|---|---|---|
| | | **VB** | **VB** |
| Polymerzusammensetzung | P1 | P3 | P3 |
| Menge Polymerzusammensetzung [g] | 275,5 | 275,5 | 275,5 |
| MESAMOLL [g] | 136,2 | 136,2 | 136,2 |
| CAB-O-SIL TS 720 [g] | 8,4 | 8,4 | 8,4 |
| OMYALITE 95T [g] | 578,8 | 578,8 | 578,8 |
| DBU [g] | 3,0 | 3,0 | 0,3 |
| Dynasilan VTMO [g] | - | - | 25,0 |
| Dynasilan 1146 [g] | - | - | 15,0 |
| Zustand unmittelbar nach Herstellung | Pastös | Pastös | Pastös |
| Viskosität nach 7d Lagerung bei 23 °C [Pa·s] | 56 | geliert | 35 |
| Viskosität nach 60d Lagerung bei 23 °C [Pa·s] | 71 | geliert | 50 |
| Hautbildezeit nach 7d Lagerung bei 23 °C [h] | 0,5 | geliert | 1 |
| Hautbildezeit nach 30d Lagerung bei 23 °C [h] | 0,5 | geliert | 1 |
| Wassergehalt nach Formulierung (DIN EN ISO 15512:2017-03, Verfahren B2) | <100 ppm | n.b. | <100 ppm |
| Haftung auf Glas, Raupentest | Kohäsives Versagen | n.b. | Kohäsives Versagen |
| Haftung auf Glas, Raupentest nach Wasserlagerung | Kohäsives Versagen | n.b. | Kohäsives Versagen |
| Zugfestigkeit [N/mm²] | 2,7 | n.b. | 2,7 |
| Reissdehnung [%] | 170 | n.b. | 170 |
| Shore A Härte | 60 | n.b. | 61 |

| | | | |
|---|---|---|---|
| **VB:** Vergleichsbeispiel | | | |

Die Ergebnisse zeigen, dass mit der erfindungsgemäßen Polymerzusammensetzung P1 auch ohne Zugabe von Trocknungsmittel und Silan-Haftvermittler eine lagerstabile Formulierung erhalten wird, deren Reaktivität und Eigenschaften im ausreagierten Zustand vergleichbar sind mit einer Vergleichszusammensetzung, die unter Verwendung der Polymerzusammensetzung P3 und Zugabe von Trocknungsmittel und Haftvermittler erhalten wird. Im Gegensatz dazu führt die Verwendung der Polymerzusammensetzung P3 bei Verzicht auf ein Trocknungsmittel und einen Haftvermittler zu einer nicht lagerstabilen Zusammensetzung.

## Patentansprüche

1. Eine Polymerzusammensetzung herstellbar durch:
a) Umsetzung eines NCO-reaktiven Polymers, welches mindestens zwei NCO-reaktive Gruppen pro Molekül aufweist, mit einem Polyisocyanat, wobei das molare Verhältnis der Polyisocyanat-Moleküle zu den NCO-reaktiven Gruppen des NCO-reaktiven Polymers mindestens 1,25 : 1 beträgt;
und nachfolgend
b) Umsetzung der verbliebenen NCO-Gruppen in dem Reaktionsprodukt aus Schritt a) mit einem NCO-reaktiven Silan.

2. Polymerzusammensetzung nach Anspruch 1, wobei das molare Verhältnis der Polyisocyanat-Moleküle zu den NCO-reaktiven Gruppen des NCO-reaktiven Polymers in (a) 1,25 : 1 bis 10 : 1 beträgt.

3. Polymerzusammensetzung nach einem der Ansprüche 1 und 2, wobei das NCO-reaktive Polymer ein zahlenmittleres Molekulargewicht von 2.000 bis 100.000 g/mol aufweist.

4. Polymerzusammensetzung nach einem der Ansprüche 1 bis 3, wobei es sich bei dem NCO-reaktiven Polymer um ein Polyol handelt.

5. Polymerzusammensetzung nach einem der Ansprüche 1 bis 4, wobei das Polyisocyanat ausgewählt ist aus einer Gruppe von Polyisocyanaten umfassend 1,4-Diisocyanatobutan (BDI), 1,5-Diisocyanatopentan (PDI), 1,6-Hexamethylendiisocyanat (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)-cyclohexan, Bis-(isocyanatomethyl)-norbornan (NBDI), 4,4'-Diisocyanato-3,3'-dimethyl-dicyclohexylmethan, 4,4'-Diisocyanato-3,3',5,5'-tetramethyldicyclohexylmethan, 4,4'-Diisocyanato-1,1'-bis(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xylylendiisocyanat; XDI), 1,3- und 1,4-Bis(1-isocyanato-1-methylethyl)-benzol (TMXDI), Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin und Mischungen davon

6. Polymerzusammensetzung nach einem der Ansprüche 1 bis 5, wobei das NCO-reaktive Silan eine Verbindung der Formel (I) ist:
R¹₃Si(CH₂)ₙX (I),
wobei
R¹ jeder Rest jeweils unabhängig voneinander ausgewählt ist aus C₁-C₈-Alkyl, C₆-C₂₀-Aryl, C₁-C₈-Alkoxy oder C₁-C₈-Acyloxy und mindestens einer der Reste R¹ ein C₁-C₈-Alkoxy oder C₁-C₈-Acyloxyrest ist,
n eine ganze Zahl zwischen 1 und 4 ist,
X ausgewählt ist aus -OH, -SH oder -NHR²;
R² ausgewählt ist aus H, C₁-C₂₀-Alkyl, -CH₂CH₂CN oder -CHR³CH₂COOR⁴,
R³ ausgewählt ist aus H und -COOR⁴, und
R⁴ jeweils C₁-C₂₀-Alkyl ist.

7. Verfahren zur Herstellung der Polymerzusammensetzung nach einem der Ansprüche 1 bis 6, umfassend die Schritte:
a) Umsetzung eines NCO-reaktiven Polymers, welches mindestens zwei NCO-reaktive Gruppen pro Molekül aufweist, mit einem Polyisocyanat, wobei das molare Verhältnis der Polyisocyanat-Moleküle zu den NCO-reaktiven Gruppen des NCO-reaktiven Polymers mindestens 1,25 : 1 beträgt; und
b) Umsetzung des Reaktionsproduktes aus Schritt a) mit einem NCO-reaktiven Silan.

8. Eine feuchtigkeitshärtende Zusammensetzung umfassend eine Polymerzusammensetzung nach einem der Ansprüche 1 bis 6 und mindestens einen Zusatzstoff ausgewählt aus einem oder mehreren Füllstoffen, einem oder mehreren Vernetzungskatalysatoren, einem oder mehreren Haftvermittlern und/oder einem oder mehreren Weichmachern.

9. Feuchtigkeitshärtende Zusammensetzung nach Anspruch 8, wobei die feuchtigkeitshärtende Zusammensetzung einen gemäß DIN EN ISO 15512:2017-03, Verfahren B2, bestimmten Wassergehalt von bis zu 0,1 Gew-%, bezogen auf das Gesamtgewicht der feuchtigkeitshärtenden Zusammensetzung, aufweist.

10. Feuchtigkeitshärtende Zusammensetzung nach einem der Ansprüche 8 und 9, die keine weiteren Trocknungsmittel enthält.

11. Feuchtigkeitshärtende Zusammensetzung nach einem der Ansprüche 8 und 9, umfassend weniger als 1 Gew-% Vinylgruppen-haltige Silane, bezogen auf das Gesamtgewicht der feuchtigkeitshärtenden Zusammensetzung.

12. Feuchtigkeitshärtende Zusammensetzung nach einem der Ansprüche 8 bis 11, umfassend
5 bis 50 Gew.-% der Polymerzusammensetzung gemäß Ansprüchen 1 bis 6;
10 bis 70 Gew.-% mindestens eines Füllstoffes;
bis zu 5 Gew.-% mindestens eines Haftvermittlers;
0,001 bis 5 Gew.-% mindestens eines Vernetzungskatalysators; und
bis zu 50 Gew.-% mindestens eines Weichmachers,
jeweils bezogen auf das Gesamtgewicht der feuchtigkeitshärtenden Zusammensetzung.

13. Verfahren zur Herstellung der feuchtigkeitshärtenden Zusammensetzung nach einem der Ansprüche 7 bis 11 durch Mischen einer Polymerzusammensetzung nach einem der Ansprüche 1 bis 6 mit mindestens einem Füllstoff, mindestens einem Haftvermittler, mindestens einem Vernetzungskatalysator und/oder mindestens einem Weichmacher.

14. Verfahren nach Anspruch 13, wobei die Polymerzusammensetzung nach einem der Ansprüche 1 bis 6 mit mindestens einem Füllstoff vermischt wird, welcher einen Wasseranteil von bis zu 1 Gew.-% aufweist, bezogen auf das Gesamtgewicht des Füllstoffes.

15. Verfahren nach einem der Ansprüche 13 und 14, wobei der feuchtigkeitshärtenden Zusammensetzung höchstens 1 Gew.-% Vinylgruppen-haltige Silane zugegeben werden.

16. Verwendung der Polymerzusammensetzung nach einem der Ansprüche 1 bis 6 als Trocknungsmittel für feuchtigkeitshärtende Klebstoffe, Dichtstoffe und Beschichtungsstoffe.

17. Parkettkleber enthaltend eine Polymerzusammensetzung nach einem der Ansprüche 1 bis 6.
